# EUROPEAN PATENT SPECIFICATION

(11) **EP 2 519 906 B1**
(45) Date of publication and mention of the grant of the patent: **10.05.2017**
(21) Application number: 09812424.1
(22) Date of filing: 30.12.2009
(51) Int. Cl.: G06F 21/00, H04L 29/06

(54) **METHOD AND SYSTEM FOR USER AUTHENTICATION**
VERFAHREN UND SYSTEM FÜR BENUTZERAUTHENTIFIZIERUNG
PROCÉDÉ ET SYSTÈME D'AUTHENTIFICATION D'UTILISATEUR

(43) Date of publication of application: 07.11.2012
(73) Proprietor: NEC Corporation, Tokyo 108-8001 (JP)
(72) Inventor: GRUSCHKA, Nils, 69115 Heidelberg (DE); LO IACONO, Luigi, 69115 Heidelberg (DE); KOHRING, Gregory Allen, 69115 Heidelberg (DE); RAJASEKARAN, Hariharan, 69115 Heidelberg (DE)
(74) Representative: Vossius & Partner Patentanwälte Rechtsanwälte mbB
(86) International application number: PCT/EP2009/068039
(87) International publication number: WO 2011/079872

(56) References cited:
- EP-A1- 2 040 228
- WO-A1-2009/056897
- US-A1- 2006 094 403
- US-A1- 2007 079 135

## Description

### Technical field of the application

The present invention relates to a method and a system for user authentication or authentication between a server and a client, in particular, the user authentication done across multiple domains using one time passwords generated from a single secret.

### Background of the invention

The conventional user authentication for granting access to a particular server using a password has been applied broadly. With increased usage of the World Wide Web, a user often has many different accounts for authentication on different sites across multiple domains from different server maintainer, e.g. online shop account, search engine profile account, email account etc. One way to make the management of such a large amount of usernames and passwords easier is to use a password management system which can store or generate, depending on the technical embodiment, all user's passwords for the distinct sites the user uses securely.

Available password management solutions solve the problem of a user requiring to memorize many passwords. Still, according to the technical realization (e.g. password store or password generator) these available solutions have disadvantages such as: the password management system has to be installed on every single device the user uses, leading to synchronization issues; the password management system needs to be protected in the first place; the password stored in the password management system is static, i.e. every time when the user accesses a particular site, the same password is sent.

Most of these issues are resolved by so-called one-time passwords, abbr. OTP. An OTP is a password that is only valid for a single login session or transaction. OTPs avoid a number of shortcomings that are associated with traditional static passwords which are broadly used for user authentication between a server and a client. For example, if a potential intruder manages to record an OTP that was already been used to log into a service or to conduct a transaction the intruder will not be able to abuse it since it will be no longer valid for the subsequent login attempts. As an OTP can not be memorised by human beings since it is a random looking string generated freshly and only once, it requires additional technology in order to be usable. The OTP algorithms vary greatly in the details such as generating a new password based on the previous password, based on time synchronisation between the authentication server and the client providing the password or algorithms in which the OTP is generated based on a challenge and/or counter. A challenge may be for example a random number chosen by the authentication server or transaction details.

One-time passwords are usually related to physical hardware tokens, that is, each user is given a personal token that generates one-time passwords: Mobile phones or PDAs are also considered to be able to generate time-synchronised one-time passwords, so that the user will not need to carry around a separate hardware token for each security domain.

One example on how to generate an OTP is suggested by Leslie Lamport in the textbook "Password authentication with insecure communication", published in 1981, SRI International, which uses a one-way function *f*. The OTP system works by starting with the initial seed s then generating passwords *f(s), f(f(s)), f(f(f(s))),*... as many times as necessary. If an indefinite series of passwords is required a new seed value can be chosen after the set for *s* is exhausted. Each new password is then dispensed in reverse, with *f(f(*...*f(s))*...*)* first, to *f(s)*. In this case, if an intruder is able to see a one-time password he may have access for one-time period or login, but the one-time password becomes useless when the static period expires. In order to get the next valid password in the series from the previous passwords, the intruder needs to find a way of calculating the inverse function *f* ^{-*1*}. Since *f* was chosen to be a one-way function, it is extremely difficult to do so. The function *f* is commonly a cryptographic hash function. The calculating of the inverse function is a computationally infeasible task.

Another approach to generate an OTP is based on synchronised clocks between the authentication server and the client. Time-synchronised one-time passwords are usually related to physical hardware tokens, that is, each user is given a personal token that generates one-time passwords. The token device contains an accurate clock that has been synchronised with the clock on the authentication server. On these devices, the generation of a new password is mainly based on the synchronized time.

The conventional solution to generate an OTP as described above works only when a secret and in some cases a clock/counter is shared between the client and the authentication server in a particular domain. Thus if the user intends to use OTPs for authenticating to multiple distinct domains, two options are available: (i) share the same "shared secret" with the authentication servers of the different domains, or (ii) create a different "shared secret" for every domain. Option (i) is not advisable from a security perspective, since one domain can theoretically impersonate the user at another domain. Option (ii), though secure, is not user friendly, as the user needs to store multiple secrets one per each domain, which causes scalability as well as usability problems.

WO2009056897 A1 discloses a method for authenticating a user that involves generating a challenge univocally associated with a user to be authenticated, and generating an expected answer code by processing and comparing the challenge to an answer code. The answer code is received from the user and compared with the expected answer code. An image displayable through a display device is obtained by encoding the challenge. The user is authenticated based on the comparison result. A captured image is processed to generate an answer code for exploiting secret information univocally associated with the user.

US2007079135 discloses a user authentication system capable of maintaining high-level security and of reducing a user's load of operations necessary for login is provided. The user authentication system includes a user terminal, a mobile phone, a password issuing unit, and a service providing unit. When a user accesses the system via the user terminal, the service providing unit encodes connection information of the password issuing unit into a code, and sends the encoded code to the user terminal. The mobile phone decodes the code displayed on the user terminal, and accesses the password issuing unit using the connection information. The password issuing unit generates a one-time password, and sends the one-time password to the service providing unit and also to the mobile phone. The user terminal sends the one-time password displayed on the mobile phone and user identification information to the service providing unit. When the service providing unit determines that the two one-time passwords each sent from the user terminal and the password issuing unit are identical, the service providing unit permits the access of the user via the user terminal.

### Summary of the invention

In view of the above, there is a need to provide an improved method and system for user authentication which is easier, more secure, scalable and flexible. The present invention therefore enables user authentication to multiple distinct domains, for instance to various websites, with the use of a one-time password generated using a single secret.

These and other objects can be obtained by the features of the claims of the present invention. In order to overcome the problems in the prior art, the system and method according to the present invention generate dynamic passwords, i.e. OTPs for each site the user visits which are valid only for that session, instead of using static passwords. Moreover, these OTPs for the different sites are generated using a single secret, i.e. the user needs to remember or store only one secret to generated OTPs for the accounts for different sites such as email service, online shop access, access to other membership etc.

The present invention provides a method for user authentication for accessing from a client to a server over a packet based network using a one-time password and a username, wherein the client comprises a first secret, and the server comprises a database for storing a second secret provided on basis of the first secret by the client, according to claim 1.

The present invention also relates to a system for performing the steps of the method.

The second secret is preferably generated in an initial stage by the client using the first secret and a server identification through a particular hash function. The second secret used for computing the one-time password in step b) may be generated according to the same procedure. Alternatively, the second secret generated in the initial stage may be store on the client and reused in step b). The server identification may be the internet protocol address or the domain name of the server. The purpose of the server identification is to identify the server to be accessed from the client. Once the second secret is generated by the client and stored in the database on the server, there is no need to repeat this again when the client accesses the server at a later time if there is no change applied to the user authentication.

According to a preferred embodiment, wherein the first secret is a private key and the second secret is a public key, wherein the private key and the public key are provided as an asymmetric key pair. The asymmetric key pair may be provided by the client in step a) or pre-acquired from a third party site. The public key may be used for encrypting the challenge whereas the private key may be used for decrypting the challenge which is encrypted with the public key. The private key is preferably located on the client and the public key may be transferred to the server during the initial step a) and stored in the database on the server.

The client may further comprise a data processing unit for providing the second secret in step a) and for computing the one-time password in step c). Preferably, the data processing unit is a cryptographic unit.

According to a preferred embodiment, the challenge is encoded in a visually representable image, in particular a 2D-barcode.

According to a preferred embodiment, the data processing unit may be provided in a mobile phone with a camera to visually capture the challenge and to compute the one-time password using the random data decoded from the challenge and the second secret. Alternatively the data processing unit may be implemented as a software solution, i.e. a program running on the client. The program may emulate the cryptographic unit for computing the one-time password and automatically input the generated one-time password and submit the one-time password to the server for validation.

The present invention provides an efficient and a scalable password generation and management system for authentication at multiple domains by generating one time passwords for these domains using a single secret. One of the advantages of the present invention is that no memorisation of passwords for multiple sites is required, only one secret is needed to generate one time passwords for all sites, wherein the second secret may be generated from the first secret, no dedicated hardware device is required, i.e., it can be for example implemented within standard camera phones. Moreover, the present invention provides a simple adaption to common password based authentication systems that are dominating the web. According to the present invention, an involvement of trusted third parties is not required.

### Brief description of the drawings

The invention will be now be described in detail with respect to preferred embodiments with reference to accompanying drawings, wherein:
- Fig. 1: shows a schematic diagram of the initialization stage of the user authentication from the client to the server in a method according to a first preferred embodiment of the present invention;
- Fig. 1a-1d: show the steps a) to d) of the method according to the first preferred embodiment of the present invention, respectively;
- Fig. 2: shows a schematic diagram of the initialization stage of the user authentication from the client to the server in a method according to a second preferred embodiment of the present invention;
- Fig. 2a-2d: show the steps a) to d) of the method according to the second preferred embodiment of the present invention, respectively;
- Fig. 3: shows a diagram of the user authentication method according to a third preferred embodiment of the present invention.

### First preferred embodiment

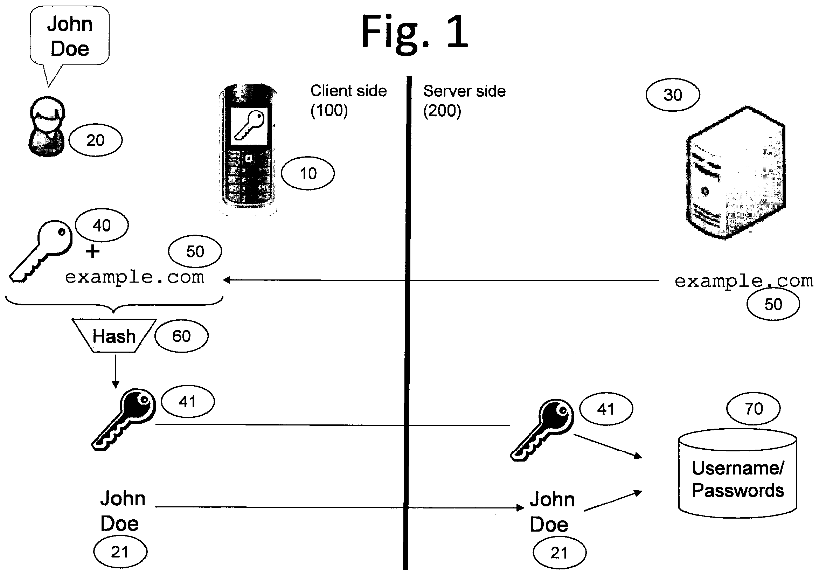

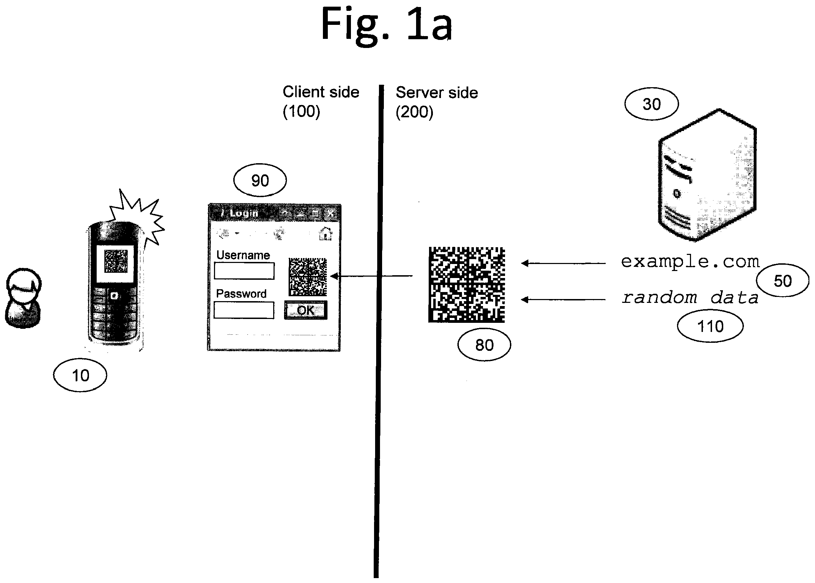

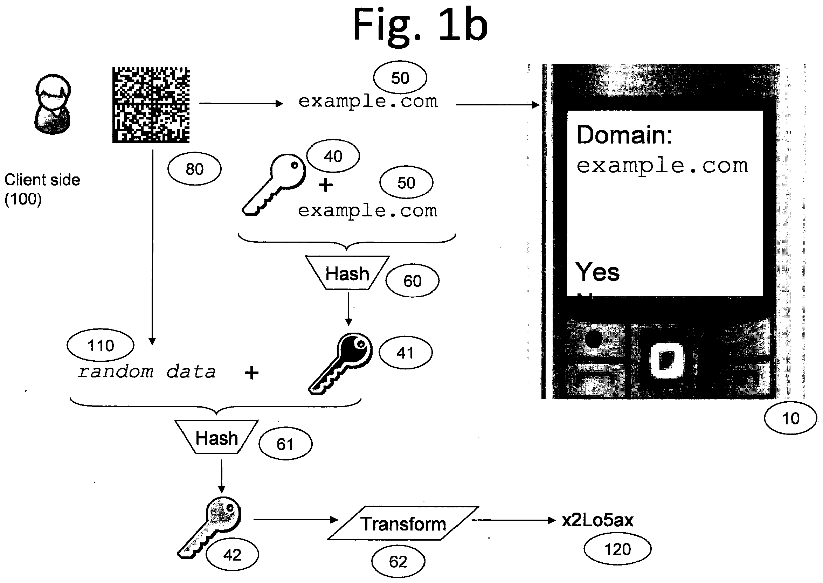

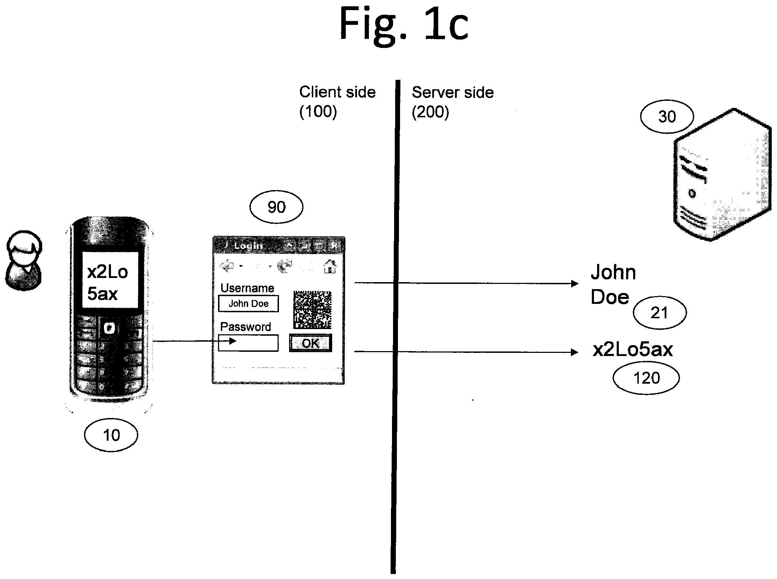

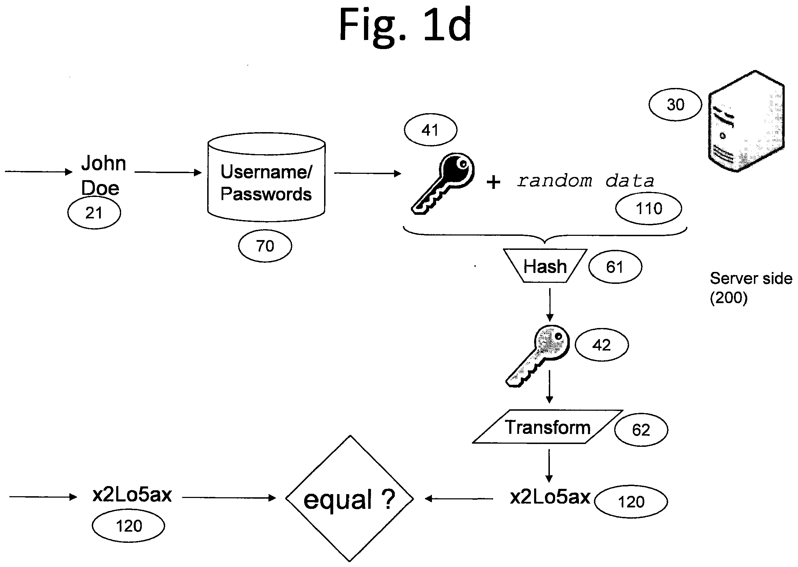

Fig. 1 shows the initialization stage for preparing the user authentication between a client and a server according to a first preferred embodiment of the present invention. A camera-equipped mobile phone 10 may be used as a data processing unit. The camera-equipped mobile phone 10 may be considered as a token card for generating the one-time password. A user name 21 may be chosen to a particular user 20 for accessing a server 200 from a client 100. The system according to the present invention may be substantially divided into a client side 100 comprising the data processing unit 10 and a client host comprising a login windows 80, and a server side 200 comprising the sever host 30 and a database 70. The initialization step shown here works as follows. Let's assume a user account at the site www.example.com needs to be created, i.e. registered on the server side 200 and there is a main secret 40 stored on the client side 100, i.e. in data processing device 10 (e.g. mobile phone). The main secret 40 and the site's domain name "example.com" 50 can be put into a cryptographic hash function 60 to generate a site secret 41. The generated site secret 41 along with the chosen user name 21 into the database 70 at the site www.example.com. The domain name example.com is the identification of the server which can be used for indentifying the server. Once the initialization step is done, the system according to the present invention is prepared for the actual user authentication.

Fig. 1a shows an exemplary step a) of the method according to the first embodiment of the present invention. Let us assume the user wants to access the server www.example.com via a web browser running on a PC at the client side 100. The site responds with a login page 90 for display in the web browser and sends a challenge 80,e.g. a 2D barcode 80 which has the random data 110 and the site's domain name example.com 50 encoded therein. The 2D-barcode can be displayed within the login page 90 in the web browser at the client side 100. The 2D-barcode shown on the PC may be captured by the mobile phone 10.

Fig. 1b shows an exemplary step b) of the method according to the first embodiment of the present invention. The mobile phone 10 extracts and separates the random data 110 and the domain name 50 from the 2D barcode. There are standard ways of doing the encoding/decoding with respect to 2D barcodes. Preferably, the mobile phone shows the domain name example.com 50 on the display so that the user 20 may visually inspect and approve it. If the user presses "YES", the process continues. This is to make sure that the device 10 is going to generate a one-time password for the intended target, i.e. the site to be accessed. This is in order to protect against certain types of attacks, man-in-the-middle. The mobile phone 10 then generates the site secret 41 from the main secret 40 and the domain name as shown in the initialization step in Fig. 1. Alternatively, the generated site secret 41 may be also stored on the mobile phone 10 in the initialization step. The phone uses the site secret 41 and the random data 110 sent in the 2D-barcode to generate a one-time password hash 42 using a hash function 61. It is to be noted that the hash functions 60 and 61 mentioned throughout the present invention may use the same hash algorithm. The output of a hash function is usually a long binary string. As this is hard to manually enter into a Web form, the hash-based one-time password 42 is transformed into a human-readable and more usable one-time password 120 using the transform function 62.

Fig. 1c shows an exemplary step c) of the method according to the first embodiment of the present invention. The plain one-time password 120 may now be displayed on the camera-equipped mobile phone 10 and can be input with the username 21 into the login window 90. After pressing the OK button, the one-time password 120 and the user name 21 may be transferred to the server host 30.

Fig. 1d shows an exemplary step d) of the method according to the first embodiment of the present invention. At the server side 200, the one time password 12 my be validated in the following way: The site secret 41 associated to the username 21, which is stored in the database 70 in the initial stage, can be loaded. The one-time password hash 42 can be calculated from the site secret 41 and the random data 110 using the hash function 61. Once the one-time password hash 42 is calculated, it can be transformed using the transform function 62 to obtain an expected one-time password 120. The one-time password received from the step c) can be now compared with the expected one-time password. Once the validation of the one-time password is successful, the server host 30 may send an acknowledgement for granting the access from the client.

It is to be noted that by using a cryptographic protocol and system according to the first preferred embodiment of the present invention, a huge number of distinct domains may be efficiently managed in a scalable way. The one-time password device 10 only needs to store one cryptographic secret 40 since the site secret 41 may be calculated thereon. Therefore the cryptographic secret 40 is only known to the user's password device 10. As discussed above, the challenge sent from the server host 30 to the client, i.e. from the site to the user may be preferably encoded in a visually representable image such as a 2D barcode, a line barcode or any standardized encoded image. The response is one-time password calculated based on the cryptographic secret on the challenge obtained from the 2D barcode. The response is transformed to an alphanumeric string, i.e. plain text which can easily be entered by the user via a standard keyboard on the client.

### Second preferred embodiment

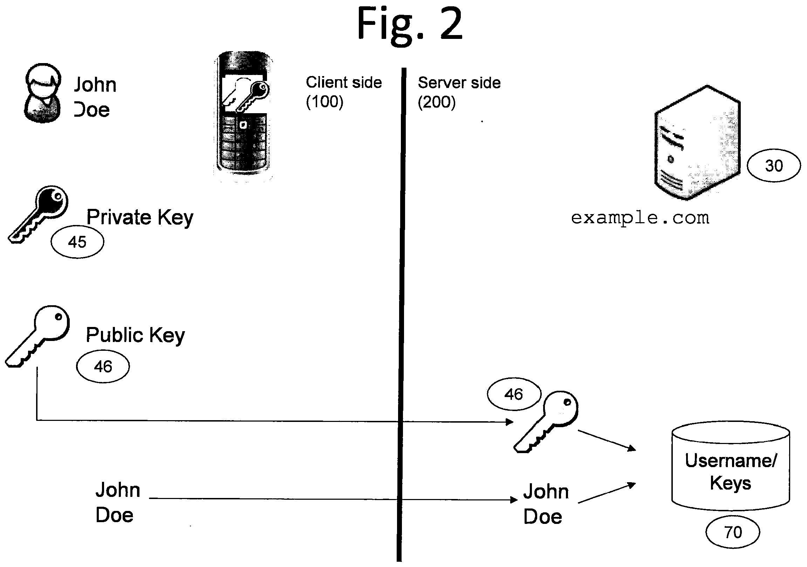

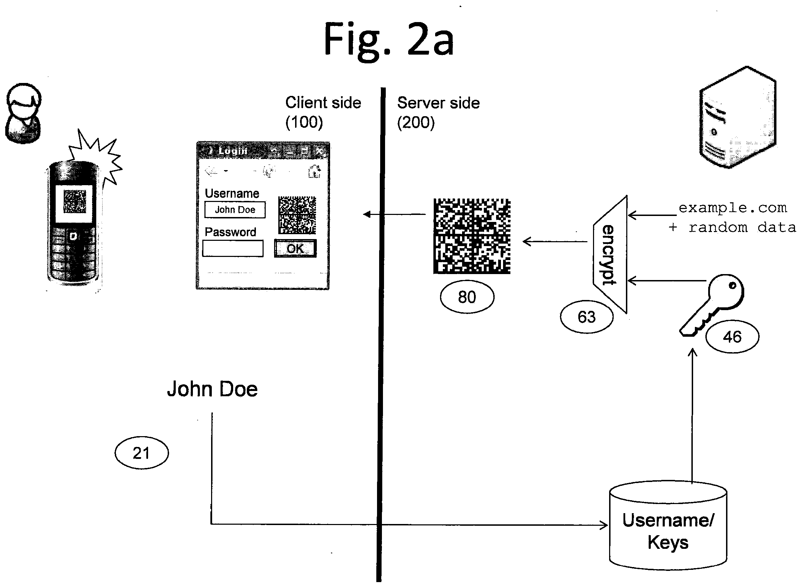

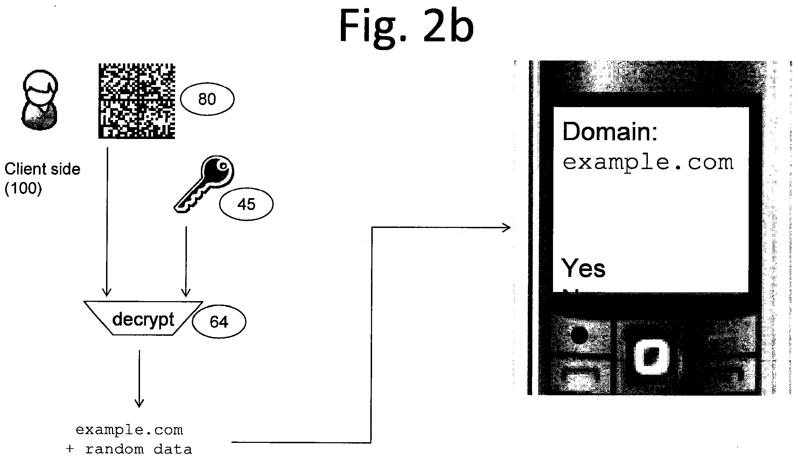

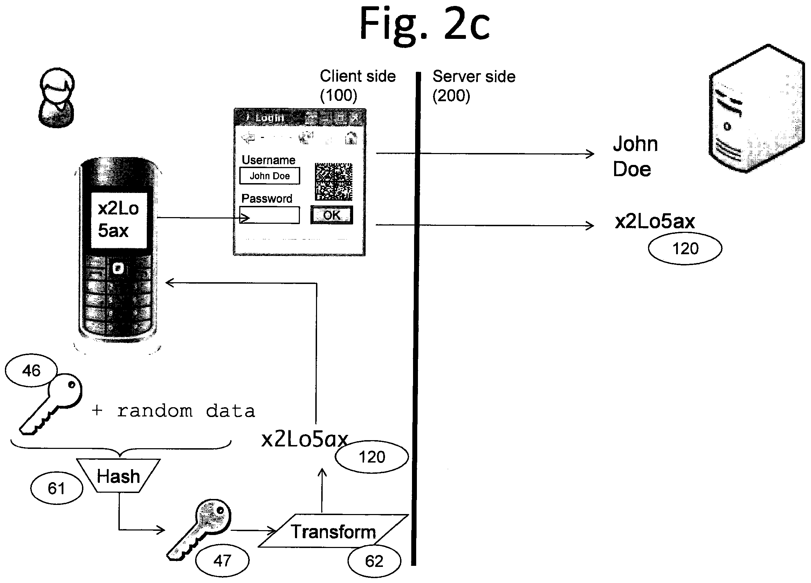

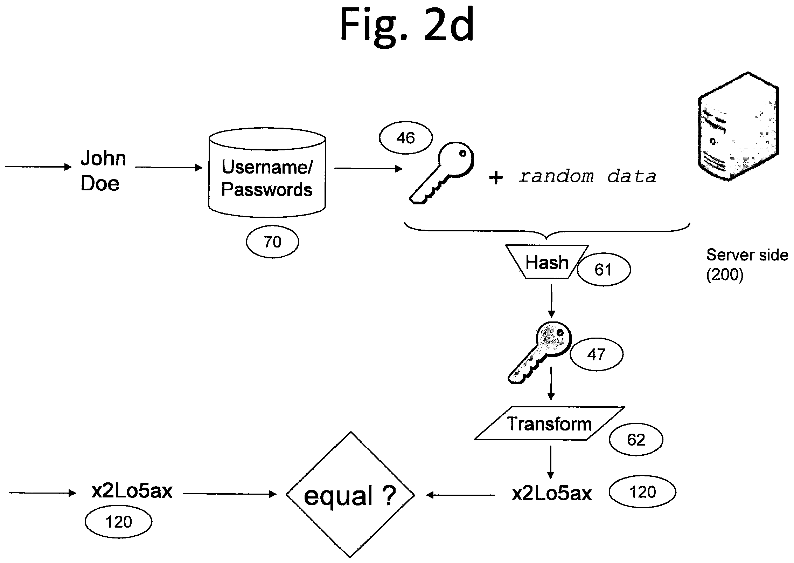

Fig. 2 shows the initialization stage of a method according to a second embodiment. In this second embodiment, instead of an arbitrary main secret 41 in the first embodiment, the client holds an asymmetric key pair. It is not mandatory to create a per site secret, instead the one time password 120 is derived directly from the public key. The preferred advantage of this embodiment over the first embodiment is that, in the first embodiment, if the site secret is compromised by a breach of the server side infrastructure, it is possible for an attacker to impersonate the user at that particular site. In order to prevent this, a public key of the user is stored on the site, which is not a secret at the site. In the initialization stage, the asymmetric public-private key pair may be acquired by the client, i.e. the mobile device can generate this key pair or acquire it from a trusted third party site. In respect to the site secret 41 in the first embodiment, the client 100 provides here the public key 46 which is in association with the private key 45 to the server. The private key 45 is stored securely inside the mobile phone 10. During the registration process at a particular site, the username 21 and the public key 46 may be sent to the site for storing in its database 70.

Fig. 1a shows an exemplary step a) of the method according to the second embodiment of the present invention. The user name 21 is entered into the login window 90 at the client side 100 and sent to the site. The site retrieves the corresponding public key 46 for the user name 21 and encrypts the site's domain name example.com and random data using this public key 46 via the encrypt function 63. The result is then encoded as a 2D bar code 80 as in the first embodiment. The 2D barcode may be shown on the login page and visually captured using the mobile phone 10.

Fig. 1b shows an exemplary step b) of the method according to the second embodiment of the present invention. The mobile phone decrypts the 2D-barcode using the private key 45 stored in the mobile phone 10 to retrieve the site's domain name and the random data. The mobile phone shows the domain name on the display. Preferably, the domain name can be visually inspected and approved. If the user presses "YES", the process continues, otherwise it discards generating the one-time password. This makes sure the device is generating a password for the intended target. This is useful for protecting against certain types of attacks, man-in-the-middle.

Fig. 1c shows an exemplary step c) of the method according to the second embodiment of the present invention. The phone 10 uses the public key 46 and the random data 110 sent in the 2D barcode to generated the one time password hash 47 using the hash function 61. The output of a hash function is usually a long binary string. As this is hard to manually enter into a Web form, the one time password hash 47 is transformed into a one-time password 120 using the transform function 62. The mobile phone shows the one-time password 120 on the display. The one-time password and the username 21 can be now input into the login page 90. By pressing "OK", the login page 90 sends this information to the service on the site.

Fig. 1d shows an exemplary step d) of the method according to the second embodiment of the present invention. At the server side 200, the one time password may validated in the following way: The public key 46 associated to the username and stored in the initialization stage can be requested from the database 70. From the public key 46 and the random data 110 the one-time password hash 47 can be calculated using the hash function 61. Then, the expected one-time password 120 may be calculated at the server side 100 independently, and compared with the one-time password received form the client side 100. Once the verification of the one-time passwords is successful, the server host 30 may send an acknowledgement for granting the access from the client.

In the second embodiment, the user's secret is the private key 45 of the public-private key pair, which is known only to the user. The user transfers the public key 46 to the site in the initialization stage. The site then uses the public key 46 to encrypt the challenge 80. Only the user's private key 45 can decode the challenge. In this embodiment, the key pair does not need to be from a certificate authority as it is only used to protect the one-time password. Hence the users can generate the key pair themselves using any key generating tools at the client side 100, e.g. on the PC or with the mobile phone.

### Third preferred embodiment

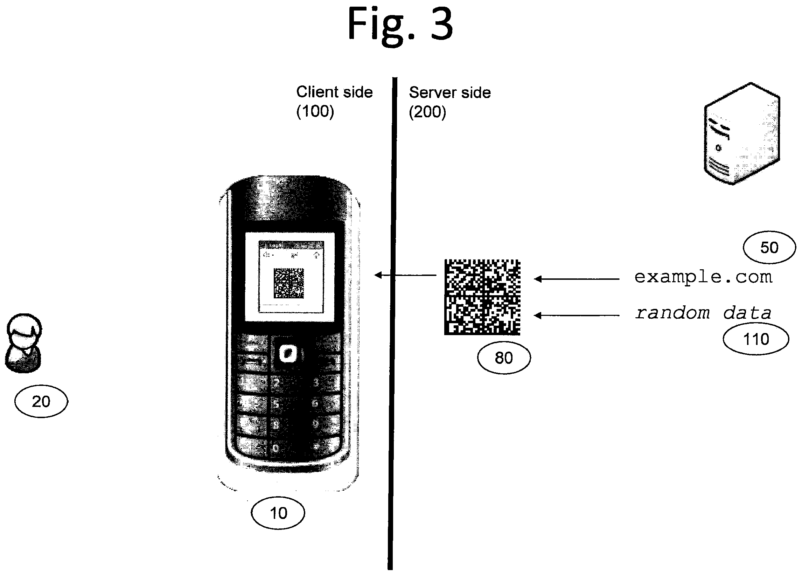

Fig. 3 shows a third embodiment of the invention, in which the website is accessed using a browser inside the mobile phone 10. That is, software is used to capture the 2D barcode from the page displayed to the user, instead of using the camera on the mobile phone 10. In this case, the software extracts the 2D barcode directly from the page and calculates the required one-time password 120. In other words, mobile phone 10 acts as the data processing unit 10 and the client host showing the login window 90. In this case, the mobile phone does not need to have a built-in camera for capturing images. The challenge 80 will be displayed on the mobile phone and computed with the software to generate the one-time password. After the one-time password the computed, it can be display on the mobile phone for inputting into the login window 80. Alternatively, the one-time password may be directly passed to the login window 80 to the appropriate field for entering the password without any user intervention, if desired.

These approaches may be implemented as configurable options which can be freely chosen by the user. This extends the present invention to cases where the user is accessing a site on the internet via his mobile phone, where using another phone to capture the 2D barcode image is not practical and feasible.

The invention has been illustrated and described in detail in the drawings and foregoing description. Such illustration and description are to be considered in an illustrative or exemplary and non-restrictive manner, i.e., the invention is not limited to the disclosed embodiments. Moreover, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be considered as limiting the scope.

## Claims

1. A method for user authentication for accessing from a client (100) to a server (200) over a packet based network using a one-time password (120) and a username (21), wherein the client comprises a first secret (40, 45), and the server comprises a database (70) for storing a second secret (41, 46) provided in association with the first secret by the client, wherein the method comprises the steps of: a) transmitting a challenge (80) from the server (200) to the client (100), wherein the challenge is encoded by the server and comprises a random data (110); b) computing the one-time password (120) by the client (100) using the second secret (41, 46) and the random data decoded from the challenge (80); c) submitting the one-time password (120) and the username (21) on the client (110) to access the server (200); d) validating the one time password (120) received from the client with the one-time password (120) computed by the server using the random data and the server secret stored in the database, **characterised in that**: the second secret (41, 46) is generated by the client (100) using the first secret (40, 45) and a server identification (50), wherein the server identification is the internet protocol address or the domain name of the server, and wherein the second secret (41, 46) used for computing the one-time password in step b) is generated by the client (100) using the first secret (40, 45) and the server identification (50). secret stored in the database.

2. The method according to claim 1, wherein the second secret (41, 46) is provided by the client (100) using the first secret.

3. The method according to any one of the preceding claims, wherein the challenge (80) is a visually representable image.

4. The method according to any one of the preceding claims, wherein the challenge (80) is a 2D barcode.

5. The method according to any one of the preceding claims, wherein the server (200) comprises a plurality of hosts (30) distributed in a multi-domain environment and being capable to be accessed from the client (100).

6. The method according to any one of preceding claims, wherein the challenge further comprises the server identification (50), wherein step a) further comprises steps of: displaying the server identification (50) encoded from the challenge (80); validating the challenge (80) transmitted from the sever (200) by comparing the displayed server identification (50) with the server identification (50) for server supposed to be accessed; and performing the step b) to d) if the challenge (80) is valid, or discard the step b) to d) if the challenge is not valid.

7. The method according to any one of the preceding claims, wherein the first secret is a private key (45) and the second secret is a public key (46), wherein the private key (45) and the public key (46) are provided as an asymmetric pair, and wherein the asymmetric pair is provided by the client (100) in step a) or acquired from a third party site.

8. The method according to any one of the preceding claims, wherein the step b) further comprises step of: starting a browser (90) for displaying the login window comprising input fields for entering the username (21) and the one-time password (120).

9. The method according to any one of the preceding claims, wherein the client (100) further comprises a data processing unit (10) for providing the second secret (41, 46) in step a) and for computing the one-time password (120) in step c), and wherein the data processing unit (10) is a cryptographic unit.

10. The method according to claim 1, wherein the data processing unit (10) comprises a camera to capture the challenge (80).

11. The method according to claim 10, wherein the data processing unit (10) is a mobile phone.

12. The method according to any one of claims 1-11, wherein the client (100) further comprises a program for emulating the data processing unit (10) and for submitting the one-time password (120) generated in step c).

13. A system for user authentication for accessing from a client (100) to a server (200) over a packet based network using a one-time password (120) and a username (21), wherein the client comprises a first secret (40, 45), and the server comprises a database (70) for storing a second secret (41, 46) provided in association with the first secret by the client, wherein the system comprises: a) means for providing the second secret (41, 46) associated with the first secret (40, 45) by the client (100) to the server (200) and storing the second secret and the chosen username (21) in the database (70); b) means for transmitting a challenge (80) from the server (200) to the client (100), wherein the challenge is encoded by the server and comprises a random data (110); c) means for computing the one-time password (120) by the client (100) using the second secret (41, 46) and the random data decoded from the challenge (80); d) means for submitting the one-time password (120) and the chosen username on the client (110) to access the server (200); e) means for validating the one time password (120) received from the client with the one-time password (120) computed by the server using the random data and the server secret stored in the database, **characterised in that**: the second secret (41, 46) is generated by the client (100) using the first secret (40, 45) and a server identification (50), wherein the server identification is the internet protocol address or the domain name of the server, and wherein the second secret (41, 46) used for computing the one-time password in step b) is generated by the client (100) using the first secret (40, 45) and the server identification (50).

## Patentansprüche

1. Verfahren zur Benutzerauthentifizierung für einen Zugriff von einem Client (100) auf einen Server (200) über ein paketbasiertes Netzwerk unter Verwendung eines Einmalpassworts (120) und eines Benutzernamens (21), wobei der Client ein erstes Geheimnis (Secret) (40, 45) aufweist und der Server eine Datenbank (70) zum Speichern eines zweiten Geheimnisses (41, 46) aufweist, das in Verbindung mit dem ersten Geheimnis durch den Client bereitgestellt wird, wobei das Verfahren die Schritte aufweist:
a) Übertragen einer Challenge (80) vom Server (200) an den Client (100), wobei die Challenge durch den Server codiert wird und ein Zufallsdatenelement (110) aufweist;
b) Berechnen des Einmalpassworts (120) durch den Client (100) unter Verwendung des zweiten Geheimnisses (41, 46) und des von der Challenge (80) decodierten Zufallsdatenelements;
c) Übermitteln des Einmalpassworts (120) und des Benutzernamens (21) für einen Zugriff auf den Server (200) durch den Client (110);
d) Validieren des vom Client empfangenen Einmalpassworts (120) mit dem Einmalpasswort (120), das durch den Server unter Verwendung des Zufallsdatenelements und des in der Datenbank gespeicherten Servergeheimnisses berechnet wird;
**dadurch gekennzeichnet, dass**
das zweite Geheimnis (41, 46) durch den Client (100) unter Verwendung des ersten Geheimnisses (40, 45) und einer Serveridentifizierung (50) erzeugt wird, wobei die Serveridentifizierung die Internetprotokolladresse oder der Domänenname des Servers ist, und wobei das zum Berechnen des Einmalpasswortes in Schritt b) verwendete zweite Geheimnis (41, 46) durch den Client (100) unter Verwendung des ersten Geheimnisses (40, 45) und der Serveridentifizierung (50) erzeugt wird.

2. Verfahren nach Anspruch 1, wobei das zweite Geheimnis (41, 46) durch den Client (100) unter Verwendung des ersten Geheimnisses bereitgestellt wird.

3. Verfahren nach Anspruch 1 oder 2, wobei die Challenge (80) ein visuell darstellbares Bild ist.

4. Verfahren nach einem der vorangehenden Ansprüche, wobei die Challenge (80) ein 2D-Barcode ist.

5. Verfahren nach einem der vorangehenden Ansprüche, wobei der Server (200) mehrere Hosts (30) aufweist, die in einer Multi-Domänen-Umgebung verteilt sind und auf die der Client (100) zugreifen kann.

6. Verfahren nach einem der vorangehenden Ansprüche, wobei die Challenge ferner die Serveridentifizierung (50) aufweist, wobei Schritt a) ferner die Schritte aufweist: Darstellen der von der Challenge (80) codierten Serveridentifizierung (50); Validieren der vom Server (200) übertragenen Challenge (80) durch Vergleichen der dargestellten Serveridentifizierung (50) mit der Serveridentifizierung (50) des Servers, auf den zugegriffen werden soll; und Ausführen der Schritte b) bis d), wenn die Challenge (80) gültig ist, oder Verwerfen der Schritte b) bis d), wenn die Challenge nicht gültig ist.

7. Verfahren nach einem der vorangehenden Ansprüche, wobei das erste Geheimnis ein privater Schlüssel (45) und das zweite Geheimnis ein öffentlicher Schlüssel (46) ist, wobei der private Schlüssel (45) und der öffentliche Schlüssel (46) als ein asymmetrisches Paar bereitgestellt werden, und wobei das asymmetrische Paar durch den Client (100) in Schritt a) bereitgestellt oder von einer dritten Partei abgerufen wird.

8. Verfahren nach einem der vorangehenden Ansprüche, wobei Schritt b) ferner den Schritt zum Starten eines Browsers (90) zum Darstellen eines Anmeldefensters aufweist, das Eingabefelder zum Eingeben des Benutzernamens (21) und des Einmalpassworts (120) enthält.

9. Verfahren nach einem der vorangehenden Ansprüche, wobei der Client (100) ferner eine Datenverarbeitungseinheit (10) zum Bereitstellen des zweiten Geheimnisses (41, 46) in Schritt a) und zum Berechnen des Einmalpassworts (120) in Schritt c) aufweist, und wobei die Datenverarbeitungseinheit (10) eine kryptographische Einheit ist.

10. Verfahren nach Anspruch 1, wobei die Datenverarbeitungseinheit (10) eine Kamera zum Aufnehmen der Challenge (80) aufweist.

11. Verfahren nach Anspruch 10, wobei die Datenverarbeitungseinheit (10) ein Mobiltelefon ist.

12. Verfahren nach einem der Ansprüche 1 bis 11, wobei der Client (100) ferner ein Programm zum Emulieren der Datenverarbeitungseinheit (10) und zum Übermitteln des in Schritt c) erzeugten Einmalpassworts (120) aufweist.

13. System zur Benutzerauthentifizierung für einen Zugriff von einem Client (100) auf einen Server (200) über ein paketbasiertes Netzwerk unter Verwendung eines Einmalpassworts (120) und eines Benutzernamens (21), wobei der Client ein erstes Geheimnis (Secret) (40, 45) aufweist und der Server eine Datenbank (70) zum Speichern eines zweiten Geheimnisses (41, 46) aufweist, das in Verbindung mit dem ersten Geheimnis durch den Client bereitgestellt wird, wobei das System aufweist:
a) eine Einrichtung zum Bereitstellen des in Verbindung mit dem ersten Geheimnis (40, 45) bereitgestellten zweiten Geheimnisses (41, 46) durch den Client (100) für den Server (200) und Speichern des zweiten Geheimnisses und eines ausgewählten Benutzernamens (21) in der Datenbank (70);
b) eine Einrichtung zum Übertragen einer Challenge (80) vom Server (200) an den Client (100), wobei die Challenge durch den Server codiert wird und ein Zufallsdatenelement (110) aufweist;
c) eine Einrichtung zum Berechnen des Einmalpassworts (120) durch den Client (100) unter Verwendung des zweiten Geheimnisses (41, 46) und des von der Challenge (80) decodierten Zufallsdatenelements;
d) eine Einrichtung zum Übermitteln des Einmalpassworts (120) und des gewählten Benutzernamens für einen Zugriff auf den Server (200) durch den Client (110);
e) eine Einrichtung zum Validieren des vom Client empfangenen Einmalpassworts (120) mit dem Einmalpasswort (120), das durch den Server unter Verwendung des Zufallsdatenelements und des in der Datenbank gespeicherten Servergeheimnisses berechnet wird;
**dadurch gekennzeichnet, dass**
das zweite Geheimnis (41, 46) durch den Client (100) unter Verwendung des ersten Geheimnisses (40, 45) und einer Serveridentifizierung (50) erzeugt wird, wobei die Serveridentifizierung die Internetprotokolladresse oder der Domänenname des Servers ist, und wobei das zum Berechnen des Einmalpasswortes in Schritt b) verwendete zweite Geheimnis (41, 46) durch den Client (100) unter Verwendung des ersten Geheimnisses (40, 45) und der Serveridentifizierung (50) erzeugt wird.

## Revendications

1. Procédé d'authentification d'utilisateur pour l'accès d'un client (100) à un serveur (200) sur un réseau par paquets à l'aide d'un mot de passe à usage unique (120) et d'un nom d'utilisateur (21), dans lequel le client comprend un premier secret (40, 45), et le serveur comprend une base de données (70) pour stocker un second secret (41, 46) fourni en association avec le premier secret par le client, dans lequel le procédé comprend les étapes de : a) transmission d'un défi (80) du serveur (200) au client (100), dans lequel le défi est codé par le serveur et comprend des données aléatoires (110) ; b) calcul du mot de passe à usage unique (120) par le client (100) à l'aide du second secret (41, 46) et des données aléatoires décodées à partir du défi (80) ; c) fait de soumettre le mot de passe à usage unique (120) et le nom d'utilisateur (21) du client (110) pour l'accès au serveur (200) ; d) validation du mot de passe à usage unique (120) reçu du client avec le mot de passe à usage unique (120) calculé par le serveur à l'aide des données aléatoires et du secret de serveur stocké dans la base de données, **caractérisé en ce que** : le second secret (41, 46) est généré par le client (100) à l'aide du premier secret (40, 45) et d'une identification de serveur (50), dans lequel l'identification de serveur est l'adresse de protocole Internet ou le nom de domaine du serveur, et dans lequel le second secret (41, 46) utilisé pour calculer le mot de passe à usage unique à l'étape b) est généré par le client (100) à l'aide du premier secret (40, 45) et de l'identification de serveur (50).

2. Procédé selon la revendication 1, dans lequel le second secret (41, 46) est fourni par le client (100) à l'aide du premier secret.

3. Procédé selon l'une quelconque des revendications précédentes, dans lequel le défi (80) est une image représentable visuellement.

4. Procédé selon l'une quelconque des revendications précédentes, dans lequel le défi (80) est un code-barres 2D.

5. Procédé selon l'une quelconque des revendications précédentes, dans lequel le serveur (200) comprend une pluralité d'hôtes (30) répartis dans un environnement multidomaine et auxquels le client (100) peut avoir accès.

6. Procédé selon l'une quelconque des revendications précédentes, dans lequel le défi comprend en outre les étapes de : identifier le serveur (50), dans lequel l'étape a) comprend en outre des étapes de : afficher l'identification de serveur (50) codée à partir du défi (80) ; valider le défi (80) transmis par le serveur (200) en comparant l'identification de serveur (50) affichée avec l'identification de serveur (50) pour le serveur dont l'accès est supposé ; et réaliser les étapes b) à d) si le défi (80) est valide, ou abandonner les étapes b) à d) si le défi n'est pas valide.

7. Procédé selon l'une quelconque des revendications précédentes, dans lequel le premier secret est une clé privée (45) et le second secret est une clé publique (46), dans lequel la clé privée (45) et la clé publique (46) sont fournies en tant que paire asymétrique, et dans lequel la paire asymétrique est fournie par le client (100) à l'étape a) ou acquise à partir d'un site tiers.

8. Procédé selon l'une quelconque des revendications précédentes, dans lequel l'étape b) comprend en outre une étape : de démarrage d'un navigateur (90) pour afficher la fenêtre d'ouverture de session comprenant des champs d'entrée pour entrer le nom d'utilisateur (21) et le mot de passe à usage unique (120).

9. Procédé selon l'une quelconque des revendications précédentes, dans lequel le client (100) comprend en outre une unité de traitement de données (10) pour fournir le second secret (41, 46) à l'étape a) et pour calculer le mot de passe à usage unique (120) à l'étape c), et dans lequel l'unité de traitement de données (10) est une unité cryptographique.

10. Procédé selon la revendication 1, dans lequel l'unité de traitement de données (10) comprend une caméra pour capturer le défi (80).

11. Procédé selon la revendication 10, dans lequel l'unité de traitement de données (10) est un téléphone mobile.

12. Procédé selon l'une quelconque des revendications 1 à 11, dans lequel le client (100) comprend en outre un programme pour émuler l'unité de traitement de données (10) et pour soumettre le mot de passe à usage unique (120) généré à l'étape c).

13. Système d'authentification d'utilisateur pour l'accès d'un client (100) à un serveur (200) sur un réseau par paquets à l'aide d'un mot de passe à usage unique (120) et d'un nom d'utilisateur (21), dans lequel le client comprend un premier secret (40, 45), et le serveur comprend une base de données (70) pour stocker un second secret (41, 46) fourni en association avec le premier secret par le client, dans lequel le système comprend : a) un moyen de fourniture du second secret (41, 46) associé au premier secret (40, 45) par le client (100) au serveur (200) et le stockage du second secret et du nom d'utilisateur (21) choisi dans la base de données (70) ; b) un moyen de transmission d'un défi (80) du serveur (200) au client (100), dans lequel le défi est codé par le serveur et comprend des données aléatoires (110) ; c) un moyen de calcul du mot de passe à usage unique (120) par le client (100) à l'aide du second secret (41, 46) et des données aléatoires décodées à partir du défi (80) ; d) un moyen de soumission du mot de passe à usage unique (120) et du nom d'utilisateur choisi du client (110) pour l'accès au serveur (200) ; e) un moyen de validation du mot de passe à usage unique (120) reçu du client avec le mot de passe à usage unique (120) calculé par le serveur à l'aide des données aléatoires et du secret de serveur stocké dans la base de données, **caractérisé en ce que** : le second secret (41, 46) est généré par le client (100) à l'aide du premier secret (40, 45) et d'une identification de serveur (50), dans lequel l'identification de serveur est l'adresse de protocole Internet ou le nom de domaine du serveur, et dans lequel le second secret (41, 46) utilisé pour calculer le mot de passe à usage unique à l'étape b) est généré par le client (100) à l'aide du premier secret (40, 45) et de l'identification de serveur (50).
